# EUROPÄISCHE PATENTSCHRIFT

(11) **EP 4 062 088 B1**
(45) Veröffentlichungstag und Bekanntmachung des Hinweises auf die Patenterteilung: **25.10.2023**
(21) Anmeldenummer: 20811288.8
(22) Anmeldetag: 20.11.2020
(51) Int. Cl.: F16K 3/08, F01P 7/14, F16K 11/074, F16K 41/08, F16K 41/04

(54) **DREHVENTIL**
ROTARY VALVE
SOUPAPE ROTATIVE

(30) Priorität: 22.11.2019 DE 102019218107
(43) Veröffentlichungstag der Anmeldung: 28.09.2022
(73) Patentinhaber: Mack & Schneider GmbH, 70794 Filderstadt (DE)
(72) Erfinder: BACHOFER, Steffen, 70794 Filderstadt (DE)
(74) Vertreter: Clarenbach, Carl-Philipp
(86) Internationale Anmeldenummer: PCT/EP2020/082859
(87) Internationale Veröffentlichungsnummer: WO 2021/099552

(56) Entgegenhaltungen:
- CN-U- 208 442 317
- DE-U1-202012 012 981

## Beschreibung

Die Erfindung betrifft ein Drehventil, insbesondere Mehrwege-Regulierventil, mit einem Gehäuse, das zumindest einen Zulaufanschluss und zumindest einen Ablaufanschluss für ein flüssiges und/oder gasförmiges Medium aufweist, mit mindestens einem Ventilelement, das zum Einstellen zumindest eines gewünschten Durchströmungsquerschnitts zwischen den Anschlüssen verdrehbar in dem Gehäuse gelagert ist, und mit einer mit dem Ventilelement drehfest verbundenen Steuerwelle, die mit einem Koppelende durch eine Öffnung in einer Gehäusewand des Gehäuses aus dem Gehäuse hinausgeführt ist, wobei die Steuerwelle innerhalb des Gehäuses zumindest einen Radialvorsprung aufweist, der einen Axialanschlag zur Anlage an der Gehäusewand aufweist, und mit zumindest einem zwischen Steuerwelle und Gehäuse wirkenden Dichtelement.

Drehventile der eingangs genannten Art sind aus dem Stand der Technik bekannt. Sie werden beispielsweise in Kraftfahrzeugen zur Regulierung von Kühlwasserkreisläufen oder auch in Getränkeautomaten eingesetzt. Beispielsweise ist aus der Gebrauchsmusterschrift DE 20 2012 012 981 U1 ein Scheibenventil bekannt. Durch den Axialanschlag ist die Steuerwelle axial in dem Gehäuse in zumindest eine axiale Richtung formschlüssig festgelegt. Dabei dient der Axialanschlag sowohl zur Lagerung als auch zur Dichtung zwischen Gehäuse und Steuerwelle, wobei die Hauptdichtung durch ein koaxial zur Steuerwelle angeordnetes Dichtelement gebildet ist, wodurch verhindert wird, dass das durch das Drehventil zu regulierende Medium aus dem Gehäuse in die Umgebung des Drehventils gelangt. Es wird insbesondere eine Leckage des Mediums aus dem Gehäuse heraus durch die dichtende Anlage an dem Dichtelement verhindert. Die Steuerwelle liegt vorzugsweise auf dem Dichtelement auf, so dass dieses zwischen Axialanschlag der Steuerwelle und Gehäusewand vorgespannt oder elastisch verformt gehalten ist. Durch einen am Gehäuse angeordneten Abstandshalter, der dem Radialvorsprung zugeordnet ist, wird die maximale Verformung des Dichtelements begrenzt.

Aus der Offenlegungsschrift CN 208 442 317 U ist ein weiteres Scheibenventil bekannt.

Der Erfindung liegt die Aufgabe zugrunde, ein verbessertes Drehventil zu schaffen, das zum einen ein Austreten von Flüssigkeit und/oder ein Eindringen von Schmutzpartikeln sicher verhindert und zum anderen gewährleistet, dass die Steuerwelle und damit die Ventilscheibe dauerhaft leichtgängig drehbar sind und auch bleiben.

Die der Erfindung zugrundeliegende Aufgabe wird durch ein Drehventil mit den Merkmalen des Anspruchs 1 gelöst. Dieses hat den Vorteil, dass aufgrund einer vorteilhaften Ausbildung sichergestellt ist, dass das Dichtelement stets mit dem zu fördernden beziehungsweise zu regulierenden Medium in Kontakt steht und dadurch nicht austrocknet oder porös wird, und damit dauerhaft seine Funktion sicher erfüllt. Und zum anderen wird gewährleistet, dass Schmutzpartikel nicht zu dem Dichtelement gelangen und dadurch nicht dauerhaft das Dichtelement zusetzen und eine Betätigung des Drehventils erschweren.

Erfindungsgemäß ist hierzu vorgesehen, dass der Ringvorsprung mit seiner der Gehäusewand zugewandten Stirnseite auf einem ringförmigen Dichtvorsprung des Gehäuses aufliegt und wenigstens eine Axialvertiefung aufweist, die sich über einen begrenzten Umfangsabschnitt der Stirnseite bis zu ihrem Außenumfang erstreckt, und dass zwischen dem Ringvorsprung, der Gehäusewand, der Steuerwelle und dem Dichtvorsprung eine Kammer gebildet ist, in welcher das Dichtelement angeordnet ist. Das Dichtelement liegt somit axial zwischen der Gehäusewand einerseits und dem Ringvorsprung andererseits. Dadurch ist eine einfache Vorspannung des Dichtelements durch die Steuerwelle gegen die Gehäusewand einfach möglich, insbesondere indem der Steuerwelle zumindest ein Federelement zugeordnet ist, welches die Steuerwelle in Richtung der Gehäusewand mit einer Federkraft beaufschlagt. Das Dichtelement kann dabei entweder direkt an der der Gehäusewand zugewandten Stirnseite des Ringvorsprungs bereichsweise aufliegen oder es liegt bevorzugt axial an einem radial von dem Ringvorsprung beabstandeten Axialanschlag der Steuerwelle an, der axial zwischen dem Ringvorsprung und der Gehäusewand liegt. Radial ist die Kammer durch die Steuerwelle einerseits und den Dichtvorsprung des Gehäuses andererseits begrenzt. Dadurch, dass der Dichtvorsprung ringförmig ausgebildet ist, also eine geschlossene Ringform aufweist, ist das Dichtelement über seinen Umfang gesehen vollständig von dem Dichtvorsprung umgeben, sodass infolgedessen das zu regulierende Medium nur durch einen axialen Spalt zwischen Dichtvorsprung und Ringvorsprung in die Kammer, in welcher das Dichtelement liegt, gelangen kann. Hierzu weist der Ringvorsprung die bereits genannte zumindest eine Axialvertiefung an seiner der Gehäusewand und damit auf der dem Dichtvorsprung zugewandten Stirnseite auf. Durch die

Axialvertiefung ist gewährleistet, dass der Ringvorsprung und der Dichtvorsprung nicht eine durchgehende ringförmige Kontaktfläche bilden, sondern zumindest abschnittsweise beabstandet zueinander liegen. Durch die Axialvertiefung erreicht, dass die Auflagefläche des Ringvorsprungs auf dem Dichtvorsprung in Umfangsrichtung gesehen durch die Axialvertiefung unterbrochen ist, sodass hierdurch der bereits genannte axiale Spalt gewährleistet wird, durch welchen Medium in die Kammer mit dem Dichtelement gelangt. Die erfindungsgemäße Ausbildung des Drehventils ermöglicht somit einerseits eine vorteilhafte axiale Auflage der Steuerwelle an dem Dichtvorsprung und andererseits eine vorteilhafte Medienverbindung zu dem Dichtelement. Bevorzugt ist das Drehventil als Scheibenventil oder Drehkolbenventil ausgebildet, wozu das Ventilelement als Ventilscheibe oder Ventilkolben ausgebildet ist.

Gemäß einer bevorzugten Ausführungsform der Erfindung weist die Stirnseite des Ringvorsprungs mehrere, insbesondere gleichmäßig verteilt zueinander angeordnete Axialvertiefungen auf. Durch die mehreren Axialvertiefungen ist gewährleistet, dass an mehreren Stellen das Medium in die Kammer einströmen kann, und dass gleichzeitig insbesondere durch die gleichmäßig verteilte Anordnung eine vorteilhafte Auflage des Ringvorsprungs auf dem Dichtvorsprung gewährleistet ist. Insbesondere wird dadurch ein Verkippen oder Verklemmen der Steuerwelle in dem Gehäuse sicher verhindert.

Vorzugsweise weist der Ringvorsprung mindestens drei Axialvertiefungen auf, die gleichmäßig verteilt angeordnet sind. Durch die drei Axialvertiefungen ergeben sich auch drei Auflagestellen, sodass bei einer gleichmäßigen Verteilung eine bestimmte Lagerung der Steuerwelle auf dem Dichtvorsprung gewährleistet ist.

Besonders bevorzugt weist der Ringvorsprung vier, insbesondere genau vier Axialvertiefungen auf, sodass sich entsprechend vier Auflagestellen ergeben, durch welche die Steuerwelle mittels des Ringvorsprungs auf dem Dichtvorsprung aufliegt. Durch die Anzahl und Ausbildung der Axialvertiefungen kann der durch das Federelement auf die Steuerwelle ausgeübte Anpressdruck gegen den Dichtvorsprung vorteilhaft auf den Dichtvorsprung und den Ringvorsprung verteilt werden. Optional weist der Ringvorsprung daher auch mehr als 4 der Axialvertiefungen auf. Zweckmäßigerweise erstreckt sich die jeweilige Axialvertiefung radial zumindest bereichsweise bis zu der Steuerwelle beziehungsweise zu deren Grundkörper. Dadurch ist gewährleistet, dass der durch die Axialvertiefung gebildete Spalt bis in die Kammer, in welcher das Dichtelement liegt, führt. Insbesondere ist der Außendurchmesser der Steuerwelle im axialen Anschluss an den Ringvorsprung geringfügig kleiner ausgebildet als der Innendurchmesser des Dichtvorsprungs, sodass eine fluidtechnische Verbindung von der Kammer in das Gehäuse des Drehventils sicher gewährleistet ist.

Bevorzugt weist die jeweilige Axialvertiefung in Umfangsrichtung die Axialvertiefung begrenzende Seitenränder auf, die bezogen auf die Steuerwelle radial oder nahezu radial ausgerichtet sind. Dadurch, dass sich die jeweilige Axialvertiefung über einen begrenzten Umfangsabschnitt des Ringvorsprungs erstreckt, ergibt sich, dass die jeweilige Axialvertiefung in Umfangsrichtung jeweils durch Seitenränder begrenzt ist. Gemäß dieser Ausführungsform sind die Seitenränder radial oder nahezu radial ausgerichtet, sodass sie einen rechten Winkel oder nahezu einen rechten Winkel mit der Mantelwand der Steuerwelle einschließen. Durch diese Ausrichtung der Seitenränder wird eine kostengünstige Herstellung der Steuerwelle insgesamt geboten.

Gemäß einer weiteren Ausführungsform der Erfindung ist bevorzugt vorgesehen, dass die jeweilige Axialvertiefung in Umfangsrichtung die Axialvertiefung begrenzende Seitenränder aufweist, wobei in diesem Fall die Seitenränder bezogen auf die Steuerwelle von einer radialen Ausrichtung derart abweichen, dass sie in Richtung der Steuerwelle die Erstreckung der Axialvertiefung in Umfangsrichtung verringern. Insbesondere schließen die Seitenränder der jeweiligen Axialvertiefung einen stumpfen Winkel ein. Damit nähern sich die Seitenränder einer Axialvertiefung in Richtung der Steuerwelle einander an, sodass sich schmutzabweisende Schrägen oder Flügel ergeben, die bei einer Rotationsbewegung der Steuerwelle dazu führen, dass gegebenenfalls in der Axialvertiefung befindliche Schmutzpartikel noch besser aus dem Spalt nach außen, also von der Kammer mit dem Dichtelement weggetrieben werden. Dadurch wird gewährleistet, dass auch dauerhaft in dem jeweiligen Spalt sich keine Schmutzpartikel oder dergleichen festsetzen können.

Gemäß einer weiteren Ausführungsform der Erfindung ist bevorzugt vorgesehen, dass die Seitenwände geradlinig verlaufen. Dadurch ergibt sich eine einfache Kontur und Herstellung der Steuerwelle.

Alternativ weisen die Seitenwände bevorzugt zumindest eine Krümmung auf. Durch die Krümmung kann das Austreiben von Schmutzpartikeln optimiert werden.

Weiterhin ist bevorzugt vorgesehen, dass der Ringvorsprung zumindest einen Drehanschlag aufweist, der dazu ausgebildet ist, mit einem gehäusefesten Anschlag zur Begrenzung eines Drehbereichs der Welle zusammenzuwirken. Durch den Drehanschlag wird also der Drehwinkel oder Drehbereich der Steuerwelle begrenzt, sodass die Steuerwelle innerhalb des Gehäuses einen festen formschlüssigen Anschlag aufweist, der ein Weiterdrehen der Steuerwelle verhindert. Dadurch ist beispielsweise eine Neutralstellung oder Ausgangsstellung der Steuerwelle in dem Gehäuse einfach durch bewegen der Steuerwelle gegen den Anschlag einstellbar und eine Fehlfunktion oder Fehleinstellung der Steuerwelle beziehungsweise der mit der Steuerwelle verbundenen Ventilscheibe sicher verhindert.

Besonders bevorzugt ist der Drehanschlag in Umfangsrichtung gesehen zwischen zwei der Axialvertiefungen angeordnet. Damit liegt der Drehanschlag im Bereich einer zwischen zwei Axialvertiefungen liegenden Erhebung, welche den Axialanschlag des Ringvorsprungs an dem Dichtvorsprung bildet. Damit befindet sich der Drehanschlag insbesondere in dem Bereich des Ringvorsprungs, der die der höchsten Materialstärke aufweist, sodass eine sichere und robuste Funktion des Drehanschlags gewährleistet ist. Insbesondere ist der Drehanschlag einstückig mit dem Ringvorsprung und/oder der Steuerwelle verbunden.

Besonders bevorzugt ragt der Drehanschlag radial über den Ringvorsprung vor. Damit steht der Drehanschlag von dem Ringvorsprung radial ab und wirkt damit radial außerhalb des Ringvorsprungs mit dem gehäusefesten Anschlag zusammen. Dadurch werden die Funktionen von Ringvorsprung und Drehanschlag getrennt und eine optimale Ausbildung beider ermöglicht.

Besonders bevorzugt ist der gehäusefeste Anschlag an der Gehäusewand angeordnet, insbesondere einstückig mit dieser ausgebildet. Dadurch ist eine kostengünstige und bauraumsparende Anordnung des Anschlags in dem Gehäuse gewährleistet. Besonders bevorzugt ist der Anschlag außerhalb des Dichtvorsprungs an der Gehäusewand als Axialvorsprung, der in Richtung des Ringvorsprungs der Steuerwelle vorsteht, ausgebildet beziehungsweise angeordnet. Durch die einstückige Ausbildung des gehäusefesten Anschlags mit der Gehäusewand und durch eine bevorzugte einstückige Ausbildung des Drehanschlags mit dem Ringvorsprung ist eine einfache Montage und kostengünstige Herstellung des Drehventils gewährleistet. Optional weist die Steuerwelle mehrere, beispielsweise zwei Drehanschläge auf, die mit dem einen gehäusefesten Anschlag oder mit jeweils einem gehäusefesten Anschlag zusammenwirken.

Wie bereits erwähnt, weist das Drehventil bevorzugt zumindest ein Federelement auf, welches die Steuerwelle mit einer Federkraft in Richtung der Gehäusewand beaufschlagt. Hierdurch sind eine sichere Führung und Anordnung der Steuerwelle in dem Gehäuse sowie ein dichtender Anlagekontakt des Ringvorsprungs oder der Steuerwelle an dem Dichtelement und/oder dem Dichtvorsprung gewährleistet.

Im Folgenden soll die Erfindung anhand der Zeichnung näher erläutert werden. Dazu zeigen:
- Figur 1: eine vorteilhafte Ventileinrichtung mit einem Drehventil in einer perspektivischen Darstellung,
- Figur 2: das Drehventil in einer vereinfachten Längsschnittdarstellung,
- Figur 3: eine perspektivische Detailansicht einer Steuerwelle des Drehventils,
- Figur 4: eine perspektivische Detailansicht einer Gehäusewand des Drehventils und
- Figur 5: eine weitere Längsschnittdarstellung des Drehventils.

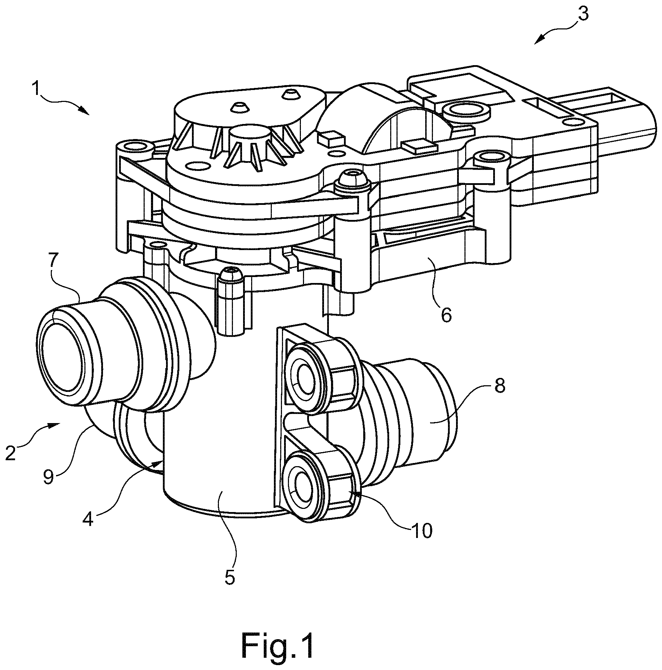

**Figur 1** zeigt ein einer perspektivischen Darstellung eine Ventileinrichtung 1, die ein als Scheibenventil ausgebildetes Drehventil 2 sowie einen Stellantrieb 3 aufweist. Das Scheibenventil weist ein Gehäuse 4 auf, welches von einem Verteilergehäuse 5 und einem Deckel 6 gebildet wird. Das Verteilergehäuse 5 weist drei Anschlüsse auf, von denen einer als Zulaufanschluss 7 und die beiden anderen als Ablaufanschlüsse 8 beziehungsweise 9 ausgebildet sind. Außerdem weist das Verteilergehäuse 5 eine Haltevorrichtung 10 zum Befestigen der Ventileinrichtung 1, beispielsweise an einer Karosserie eines Kraftfahrzeugs, auf.

An dem Deckel 6 ist der Stellantrieb 3 montiert, der insbesondere als elektromotorischer Stellantrieb 3 ausgebildet ist und hierzu einen nicht näher dargestellten Elektromotor sowie ein Getriebe aufweist, das mit einer Steuerwelle des Drehventils 2, die untenstehend näher erläutert wird, koppelbar beziehungsweise gekoppelt ist, um ein an dem Zulaufanschluss 7 bereitgestelltes Medium, insbesondere Flüssigkeit, auf die Ablaufanschlüsse 8, 9 wunschgemäß zu verteilen. Beispielsweise ist die Ventileinrichtung 1 dazu ausgebildet, in einem Kühlwasserkreislauf einer Brennkraftmaschine des Kraftfahrzeugs eingesetzt zu werden, um in Abhängigkeit vom Betriebszustand der Brennkraftmaschine Kühlwasser optimal beispielsweise auf unterschiedliche Kühlkreise zu verteilen.

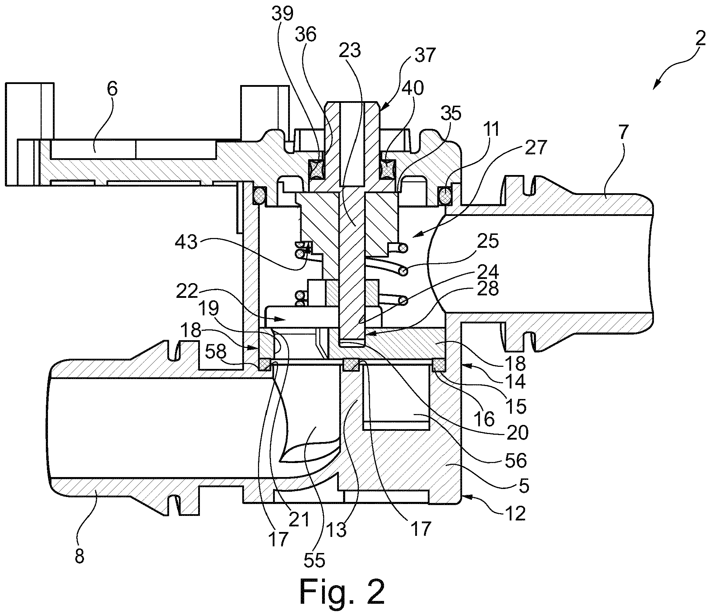

**Figur 2** zeigt in einer Längsschnittdarstellung das Drehventil 2. Das Verteilergehäuse 5 ist im Wesentlichen becherförmig ausgebildet, sodass es im Längsschnitt gesehen eine U-förmige Kontur aufweist. Die Anschlüsse 7, 8, 9 sind vorliegend einstückig mit dem Verteilergehäuse 5 ausgebildet. Der Deckel 6 verschließt das offene Ende des becherförmigen Verteilergehäuses 5, wobei zwischen Deckel 6 und Verteilergehäuse 5 außerdem ein Dichtungselement 11, das vorliegend als O-Ring ausgebildet ist, vorgespannt beziehungsweise elastisch verform gehalten ist. Der Zulaufanschluss 7 mündet - axial gesehen - oberhalb des Ablaufanschluss 8 in das Verteilergehäuse 5, also nahe zu dem Deckel 6. Von dem dem Deckel 6 gegenüberliegenden Boden 12 des Verteilergehäuses 5 geht eine Trennwand 13 aus, die sich parallel zur Längserstreckung des Verteilergehäuses 5 beziehungsweise axial erstreckt und oberhalb des Anschlusses 8 einen Zwischenboden 14 mit ihrer freien Stirnseite bildend endet.

Die Trennwand 13 bildet zwei Kammern 55, 56 in dem Verteilergehäuse 5 aus, in welche jeweils einer der Ablaufanschlüsse 8, 9 mündet, wobei in Figur 2 nur der Ablaufanschluss 8 erkennbar ist. Die Kammern 55 und 56 machen dabei etwa zwei Drittel des Verteilergehäuses 5 aus, während ein verbleibendes Drittel von dem Zwischenboden 14 des Verteilergehäuses 5 gebildet wird. Hierzu weist die Trennwand 13 einendig einen kreissegmentartigen verbreiterten Bereich für das verbleibende Drittel auf. Der Zwischenbund 14 erstreckt sich zum Teil stegförmig entlang der Innenseite der Gehäusewand des Verteilergehäuses 5 über den gesamten Umfang des Verteilergehäuses 5, um eine durchgehende Auflagefläche zu bilden. Der stegförmige Abschnitt wird von einer Stufe 58 im Verteilergehäuse 5 gebildet, die durch eine Querschnittsverjüngung des Verteilergehäuses 5 realisiert ist. Ergänzt wird der Abschnitt durch die freie Stirnseite der Trennwand 13. Die Kammern 55 und 56 erstrecken sich somit im Wesentlichen jeweils über 120° des kreisförmigen Verteilergehäuses 5, während ein Großteil des Zwischenbodens 14 von den verbleibenden 120° durch die Trennwand 13 mitgebildet wird.

Auf dem Zwischenboden 14 liegt ein Dichtelement 15 auf, das als Profildichtung 16 ausgebildet ist, deren Kontur zumindest im Wesentlichen der Kontur des Zwischenbodens 14 entspricht und elastisch verformbar ausgebildet ist. Die Profildichtung 16 liegt in einer U-förmigen Vertiefung in dem Zwischenboden ein, sodass die Profildichtung 16 an ihrem Außen- und Innenrand jeweils durch einen vorstehenden Abschnitt des Zwischenbodens 14 randseitig gehalten ist. Die Vertiefung 17 bildet damit durch die zurückbleibenden Seitenwände des Zwischenbodens 14 eine Verdrehsicherung für die Profildichtung 16.

Auf der Profildichtung 16 liegt eine keramischen Dichtscheibe 18 auf, wobei die Kontur der Dichtscheibe 18 im Wesentlichen der Kontur der Profildichtung 16 beziehungsweise des Zwischenbunds 14 entspricht. Die Dichtscheibe 18 weist dazu ebenfalls zweite Strömungsöffnungen 19 auf, die ebenfalls jeweils ein Kreissegment darstellen, das sich über etwa 120° entsprechend der Kammern 55 und 56 erstreckt. Auf der den Deckel 6 zugewandten Stirnseite weist die Dichtscheibe 18 außerdem eine Lageraufnahme 20 auf, die mittig in der Dichtscheibe 18 als zylinderförmige Vertiefung, insbesondere als becherförmige Vertiefung, ausgebildet ist. Auf der gleichen Stirnseite sind außerdem die Durchströmungsöffnungen 19 jeweils mit einer Anfasung 21 versehen, die zur Verbesserung der Strömungsverhältnisse dienen. Vorteilhafterweise sind derartige Anfasungen auch auf der Rückseite der Dichtscheibe 18 im Bereich der Strömungsöffnungen 19 vorgesehen.

Auf der Dichtscheibe 18 ist weiterhin als Ventilelement eine Ventilscheibe 22 angeordnet, die ebenfalls aus Keramik hergestellt ist und deren Außendurchmesser im Wesentlichen dem Außendurchmesser der Dichtscheibe 18 entspricht. Im vorliegenden Ausführungsbeispiel ist der Außendurchmesser der Ventilscheibe 22 geringfügig kleiner ausgebildet, um einen Reibkontakt mit der Oberfläche der Innenseite des Verteilergehäuses 5 zu vermeiden, wie in Figur 2 gezeigt. Die Ventilscheibe 22 ist kreissegmentförmig ausgebildet und erstreckt sich über ein Kreissegment von etwa 240°. Die verbleibenden 120° der Ventilscheibe 22 sind fei und somit randoffen ausgebildet, um eine Durchströmungsöffnung zu bilden, die bei einer Überlappungsstellung mit zumindest einer Strömungsöffnungen 19 der Dichtscheibe 18 einen Durchströmungsquerschnitt einstellt. Je nach Drehstellung der Ventilscheibe 22 ist somit ein gewünschter Durchströmungsquerschnitt zwischen dem Zulaufanschluss 7 und zumindest einem der Ablaufanschlüsse 8, 9 einstellbar. Die Ventilscheibe 22 liegt flächig auf der Dichtscheibe 18 auf und ist drehfest mit der oben bereits erwähnten Steuerwelle 23 verbunden. Dazu weist die Ventilscheibe 22 einen Durchbruch 24 auf, der eine Verlängerung der Lageraufnahme 20 bildet und optional ebenfalls eine kreisförmige Kontur aufweist und fluchtend zu der Lageraufnahme 21 liegt. Optional ist auch die Ventilscheibe 22 an der Durchströmungsöffnung mit Anfasungen beziehungsweise Fasen für ein verbessertes Durchströmungsverhalten versehen.

Die Steuerwelle 23 bildet zusammen mit der Ventilscheibe 22 und einem Federelement 25 eine Vormontagebaugruppe 27. Die Steuerwelle 23 ragt mit einem freien Ende 28 durch den Durchbruch 24 der Ventilscheibe 22 hindurch, um - wie in Figur 2 gezeigt - in die Lageraufnahme 20 einzugreifen beziehungsweise in dieser zu enden. Dazu ist das freie Ende 28 der Steuerwelle 23 ebenfalls kreiszylinderförmig ausgebildet, wobei der Außendurchmesser des freien Endes 28 und der Innendurchmesser der Lageraufnahme 21 derart gewählt sind, dass sie zusammen eine Radialgleitlagerung für die Steuerwelle 23 bilden.

Eine Verdrehsicherung oder Drehmitnahme zwischen Steuerwelle 23 und Ventilscheibe 22 ist bevorzugt formschlüssig realisiert. Dazu weisen beispielsweise Steuerwelle 23 und Ventilscheibe 22 im Bereich der Ventilscheibe 22 eine einen polygonförmigen Querschnitt auf, um eine Drehmitnahme zu bewirken. Optional weist die Steuerwelle 23 einen oder mehrere Radialvorsprünge auf, die in Axialvertiefungen der Ventilscheibe 22 zu deren Drehmitnahme eingreifen, sodass einerseits eine einfache Vormontage durch Zusammenstecken gewährleistet ist, und andererseits eine sichere Drehmitnahme der Ventilscheibe 22 gewährleistet ist.

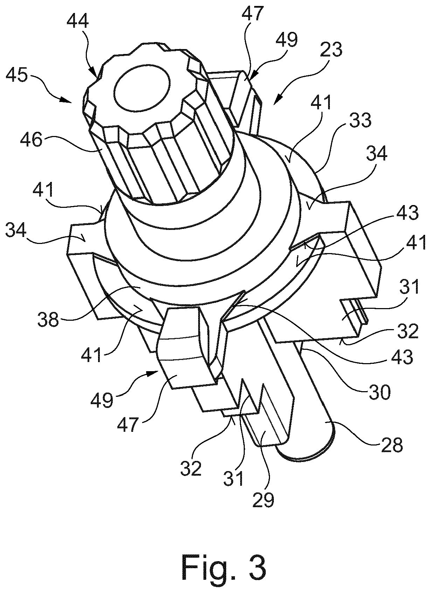

**Figur 3** zeigt dazu in einer perspektivischen Darstellung die Steuerwelle 23. Beabstandet zu dem freien Ende 28 weist die Steuerwelle 23 eine asymmetrische Querschnittskontur auf. Die Steuerwelle 23 weist dabei zwei sich gegenüberliegende radial von der Steuerwelle 23 abstehende Vorsprünge 29, 30 auf, die dazu ausgebildet sind, in entsprechende Radialaussparungen der Dichtscheibe 22 oder in ein dazu komplementär ausgebildetes Zwischenelement einzugreifen, was selbst drehfest mit der Dichtscheibe verbunden ist. Das Federelement 25, wie in Figur 2 gezeigt, ist als Schraubenfeder ausgebildet. Die Schraubenfeder ist zwischen der Dichtscheibe 22 und mehreren radial vorstehenden Stützvorsprüngen 31 der Steuerwelle 23 axial gehalten. Die Stützvorsprünge 31 sind gleichmäßig über den Umfang der Steuerwelle 23 angeordnet und einstückig mit dieser ausgebildet. Insbesondere sind vorliegend vier entsprechende Stützvorsprünge 31 gleichmäßig über den Umfang verteilt angeordnet. Vorzugsweise gehen zwei einander gegenüberliegende Stützvorsprünge 31 in die seitlichen Vorsprünge 29, 30 über. Die Stützvorsprünge 31 bilden zusammen einen ersten Axialanschlag 32 für das Federelement 25. Bei der Vormontage wird das Federelement 25 auf die Steuerwelle 23 bis an den Axialanschlag 32 aufgeschoben, anschließend wird optional das Zwischenelement und schließlich die Ventilscheibe 22 auf die Steuerwelle 23 aufgeschoben, sodass die Ventilscheibe 22 drehfest mit der Steuerwelle 23 gebunden ist. Zur Arretierung der Vormontagebaugruppe 27 weist die Steuerwelle 23 und/oder die Dichtscheibe 22, optional das Zwischenelement, elastisch verformbare Klemmrippen auf, die sich insbesondere parallel zur Längserstreckung stegförmig erstrecken und derart ausgebildet sind, dass ein Reibschluss zwischen Steuerwelle 23 und Dichtscheibe 22 oder Zwischenelement gebildet ist, der ein Zusammenhalt der Vormontagebaugruppe entgegen der Kraft des Federelements 25 gewährleistet. Optional sind die Radialvorsprünge für die Drehmitnahme durch ein drehfest mit der Steuerwelle 23 verbundenes Zwischenelement gebildet, das durch die Radialvorsprünge drehfest mit der Ventilscheibe 22 verbunden ist.

Weiterhin weist die Steuerwelle 23 auf der dem Federelement 25 abgewandten Seite der Stützvorsprünge 31 einen Ringvorsprung 33 auf, der koaxial zur Steuerwelle 23 ausgebildet und einstückig mit dieser verbunden ist. Der Ringvorsprung 33 ist ein Radialvorsprung, der auf seiner dem Ende 28 zugewandten Stirnseite in die Stützvorsprünge 31 übergeht, und auf seiner von dem Ende 28 abgewandten Stirnseite 34 im verbauten Zustand einem ringförmigen oder hülsenförmigen Dichtvorsprung 35 des Gehäuses 4 des Drehventils 2 gegenüberliegt. Der Dichtvorsprung 35 ist dabei an dem Deckel 6 ausgebildet, der insoweit eine Gehäusewand des Gehäuses 4 bildet. Der Dichtvorsprung 35 ist, wie bereits gesagt, kreisförmig beziehungsweise kreisringförmig ausgebildet und erstreckt sich in das Gehäuse hinein. Dabei ist er koaxial zu einer Öffnung 36 an dem Deckel 6 ausgebildet, durch welche die Steuerwelle 23 mit ihrem anderen freien Ende 37 aus dem Gehäuse 4 herausgeführt ist. Die Öffnung 36 ist dabei als Lageröffnung ausgebildet, durch welche die Steuerwelle an dem Deckel 6 drehbar gelagert ist.

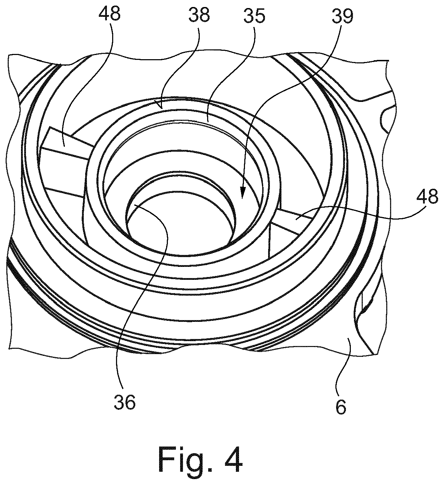

**Figur 4** zeigt eine perspektive Draufsicht auf den die Gehäusewand mit dem Dichtvorsprung 35 bildenden Gehäusedeckel 6. Gemäß dem vorliegenden Ausführungsbeispiel ist der Dichtvorsprung 35 einstückig mit dem Gehäusedeckel 6 ausgebildet. Der Dichtvorsprung 35 weist eine kreisringförmige Auflagefläche 38 auf, gegen welche die Steuerwelle 23 mit ihrem Ringvorsprung 33 durch das Federelement 25 in montiertem Zustand, wie in Figur 2 gezeigt, gedrückt ist.

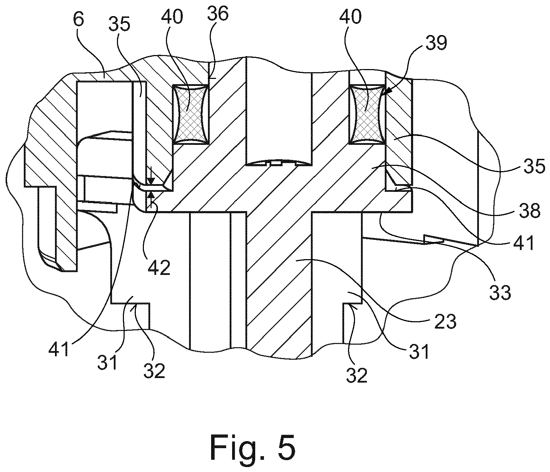

**Figur 5** zeigt in einer weiteren Längsschnittdarstellung den Bereich der Steuerwelle 23 an dem Dichtvorsprung 35. Dabei ist zu erkennen, dass die Steuerwelle 23 mit einem von dem Ringvorsprung 33 axial vorstehenden Axialvorsprung 38 in den Dichtvorsprung 35 hineinragt. Dabei ist der Außendurchmesser des Axialvorsprungs 38 geringfügig kleiner als der Durchmesser des Dichtvorsprungs 35, sodass ein schmaler Spalt zwischen diesen verbleibt. Außerdem verbleibt zwischen dem Deckel 6 und dem Axialvorsprung 38 der Steuerwelle 23 ein Freiraum, durch welchen eine Kammer 39 innerhalb des Dichtvorsprungs 35 gebildet ist. Die Kammer 39 wird damit durch die Steuerwelle, den Dichtvorsprung, die Gehäusewand und den Axialvorsprung 38 und/oder Ringvorsprung 33 begrenzt. In dieser Kammer 39 liegt ein Dichtelement 40 ein, das elastisch verformbar ist. Im montierten Zustand ist das Dichtelement 40 elastisch verformt beziehungsweise vorgespannt, sodass es dichtend zwischen der Steuerwelle 23 und dem Gehäuse 4 wirkt. Durch das Dichtelement wird gewährleistet, dass aus dem Gehäuse keine Flüssigkeit nach außen durch die Öffnung 36 austreten kann.

Wie in **Figur 3** gezeigt, weist der Ringvorsprung 33, welcher dem Dichtvorsprung 35 gegenüberliegt beziehungsweise an dem Dichtvorsprung 35 axial anliegt, mehrere Axialvertiefungen 41 auf, die über seinen Umfang gleichmäßig verteilt auf seiner dem Dichtvorsprung 35 zugewandten Stirnseite 34. Die Axialvertiefungen 41 erstrecken sich jeweils über einen begrenzten Umfangsbereich von weniger als 90° und ragen bis zum Außenumfang des Ringvorsprungs 33, sodass sie nach außen randoffen ausgebildet sind, und sich nach innen bis zu dem Vorsprung 38 der Steuerwelle 23 erstrecken. Wie in Figur 5 gezeigt, ergibt sich dadurch im Bereich der jeweiligen Axialvertiefung 41 ein axialer Spalt 42 zwischen dem Ringvorsprung 33 und dem Dichtvorsprung 35. Aufgrund der vorteilhaften Ausbildung wird erreicht, dass durch den axialen Spalt Medium aus dem Innenraum des Gehäuses in die Kammer 39 gelangen kann. Dadurch ist gewährleistet, dass das Dichtelement 40 stets mit dem Medium beaufschlagt ist und dadurch auch dauerhaft seine Dichtfunktion erfüllen kann, ohne beispielsweise porös zu werden oder zu vertrocknen. Das Medium dient dabei außerdem als Schmierung für den Reibkontakt zwischen Steuerwelle 23 und Dichtelement 40 oder Deckel 6, wodurch der Verschleiß insgesamt reduziert wird.

Wie aus **Figur 3** weiterhin hervorgeht, sind die Axialvertiefungen 41 an ihren umfangsseitigen Seitenrändern 43 derart begrenzt, dass die Seitenränder 43 sich nicht radial oder nahezu radial bezüglich der Steuerwelle 23 nach außen erstrecken, sondern schräg dazu geneigt sind, sodass sich die Axialvertiefungen 41 zur Drehachse der Steuerwelle 23 hin stärker als bei einer radialen Erstreckung der Seitenränder verjüngen. Dadurch sind die Seitenränder 43 als Schürzen oder Flügel ausgebildet, welche gegebenenfalls in den Spalt 42 gelangte Schmutzpartikel bei einer Drehbewegung der Steuerwelle 23 vorteilhaft aus dem Spalt heraustreiben. Gemäß einem weiteren, hier nicht dargestellten Ausführungsbeispiel, verlaufen die Seitenränder 43 radial oder nahezu radial, wodurch sich bei der Herstellung Kostenvorteile ergeben können.

Die Steuerwelle 23 weist weiterhin an dem durch die Öffnung 36 hindurchgeführten Ende 37 eine Polygonform als Drehmitnahme 44 auf, die ein Koppelende 45 der Steuerwelle 23 bildet. Das Koppelende 45 weist durch die Polygonausbildung eine Außenverzahnung 46 auf, die mit dem Stellantrieb 3 kuppelbar beziehungsweise in Wirkverbindung bringbar ist. Insbesondere ist der Stellantrieb 3 auf den Deckel aufschiebbar, wobei gleichzeitige das Koppelende 45 mit dem Getriebe des Stellantriebs 3 verbunden wird.

Optional weist die Steuerwelle 23 außerdem ein oder mehrere Radialvorsprünge 47 auf, wie in **Figur 3** gezeigt, die jeweils zwischen zwei benachbarten Axialvertiefungen 41 liegen und radial über den Ringvorsprung 33 vorstehen. Die Radialvorsprünge 47 sind dazu ausgebildet, mit in dem Gehäuse außerhalb des Vorsprungs liegenden und gehäusefesten Anschlägen 48, wie in **Figur 4** gezeigt, als Drehanschlag 49 zusammenzuwirken. Dadurch wird der Drehwinkel der Steuerwelle 23 vorteilhaft begrenzt, sodass eine Fehlmontage vermieden und durch die formschlüssige Drehbegrenzung eine einfache Einstellung des Stellantriebs 3 ermöglicht werden.

Während gemäß dem vorliegenden Ausführungsbeispiel das Drehventil 2 als Scheibenventil ausgebildet ist, ist gemäß dem weiteren Ausführungsbeispiel vorgesehen, dass das Drehventil als Drehkolbenventil ausgebildet ist. Dieses unterscheidet sich von dem Scheibenventil im Wesentlichen dadurch, dass das Ventilelement als Ventilkolben ausgebildet ist, der beispielsweise hohlzylinderförmig ausgebildet ist und in seiner Mantelwand Durchströmungsöffnungen aufweist, die mit den Anschlüssen des Ventils zusammenwirken.

## Patentansprüche

1. Drehventil (2), insbesondere Mehrwegeregulierventil, mit einem Gehäuse (4), das zumindest einen Zulaufanschluss (7) und zumindest einen Ablaufanschluss (8,9) für ein flüssiges und/oder gasförmiges Medium aufweist, mit wenigstens einem Ventilelement (22), das zum Einstellen zumindest eines gewünschten Durchströmungsquerschnitts zwischen den Anschlüssen (7,8,9) verdrehbar in dem Gehäuse (4) gelagert ist, und mit einer mit der Ventilelement (22) drehfest verbundenen Steuerwelle (23), die mit einem Koppelende (45) durch eine Öffnung (36) in einer Gehäusewand des Gehäuses (4) aus dem Gehäuse (4) hinausgeführt ist, wobei die Steuerwelle (23) einen Ringvorsprung (33) aufweist, der einen Axialanschlag zur axialen Anlage an einem ringförmigen Dichtvorsprung (35) der Gehäusewand aufweist, und mit zumindest einem zwischen Steuerwelle (23) und Gehäuse (4) wirkenden Dichtelement, (40) wobei zwischen dem Ringvorsprung (33), der Steuerwelle (23), der Gehäusewand und dem Dichtvorsprung (35) eine Kammer (39) gebildet ist, in welcher das Dichtelement liegt, und dass die Steuerwelle (23) mit einem von dem Ringvorsprung (33) axial vorstehenden Axialvorsprung (38) in den Dichtvorsprung (35) zum Begrenzen der Kammer (39) hineinragt, **dadurch gekennzeichnet, dass** ein Außendurchmesser des Axialvorsprungs (38) geringfügig kleiner als ein Durchmesser des Dichtvorsprungs (35) ist, sodass ein schmaler Spalt zwischen diesen verbleibt, und dass der Ringvorsprung (33) auf seiner der Gehäusewand zugewandten Stirnseite (34) wenigstens eine Axialvertiefung (41) aufweist, die sich über einen begrenzten Umfangsabschnitt der Stirnseite (34) bis zu dem radialen Außenrand des Ringvorsprungs (33) und sich nach innen bis zu dem Axialvorsprung (38) erstreckt, sodass das Medium in die Kammer (39) gelangen kann.

2. Drehventil nach Anspruch 1, **dadurch gekennzeichnet, dass** der Ringvorsprung (33) auf seiner Stirnseite (34) mehrere, insbesondere gleichmäßig verteilt zueinander angeordnete Axialvertiefungen (41) aufweist.

3. Drehventil nach einem der vorhergehenden Ansprüche, **dadurch gekennzeichnet, dass** der Ringvorsprung (33) mindestens drei Axialvertiefungen (41) aufweist.

4. Drehventil nach einem der vorhergehenden Ansprüche, **dadurch gekennzeichnet, dass** der Ringvorsprung (33) genau vier oder mehr als vier Axialvertiefungen (41) aufweist.

5. Drehventil nach einem der vorhergehenden Ansprüche, **dadurch gekennzeichnet, dass** die jeweilige Axialvertiefung (41) in Umfangsrichtung die Axialvertiefung (41) begrenzende Seitenränder (43) aufweist, die bezogen auf die Steuerwelle (23) radial oder nahezu radial ausgerichtet sind.

6. Drehventil nach einem der Ansprüche 1 bis 4, **dadurch gekennzeichnet, dass** die jeweilige Axialvertiefung (41) in Umfangsrichtung die Axialvertiefung begrenzende Seitenränder (43) aufweist, die bezogen auf die Steuerwelle (23) von einer radialen Ausrichtung derart abweichen, dass sie in Richtung der Steuerwelle die Erstreckung der Axialvertiefung (41) in Umfangsrichtung verringern.

7. Drehventil nach einem der vorhergehenden Ansprüche, **dadurch gekennzeichnet, dass** die Seitenwände (43) geradlinig verlaufen.

8. Drehventil nach einem der vorhergehenden Ansprüche, **dadurch gekennzeichnet, dass** die Seitenwände (43) zumindest eine Krümmung aufweisen.

9. Drehventil nach einem der vorhergehenden Ansprüche, **dadurch gekennzeichnet, dass** der Ringvorsprung (33) zumindest einen Drehanschlag (49) aufweist, der dazu ausgebildet ist, mit einem gehäusefesten Anschlag (48) zur Begrenzung eines Drehbereichs der Steuerwelle (23) zusammenzuwirken.

10. Drehventil nach einem der vorhergehenden Ansprüche, **dadurch gekennzeichnet, dass** der Drehanschlag (49) in Umfangsrichtung gesehen zwischen zwei der Axialvertiefungen (21) angeordnet ist.

11. Drehventil nach einem der vorhergehenden Ansprüche, **dadurch gekennzeichnet, dass** der Drehanschlag (49) als Radialvorsprung radial über den Ringvorsprung (33) vorsteht.

12. Drehventil nach einem der vorhergehenden Ansprüche, **dadurch gekennzeichnet, dass** der gehäusefeste Anschlag (48) an der Gehäusewand angeordnet, insbesondere einstückig mit dieser ausgebildet ist.

13. Drehventil nach einem der vorhergehenden Ansprüche, **dadurch gekennzeichnet, dass** es als Scheibenventil mit einer Ventilscheibe (22) als Ventilelement oder als Drehkolbenventil mit einem Drehkolben als Ventilelement ausgebildet ist.

## Claims

1. A rotary valve (2), in particular a multi-way regulating valve, with a housing (4) which has at least one inlet connection (7) and at least one outlet connection (8, 9) for a liquid and/or gaseous medium, with at least one valve element (22) which is rotatably mounted in the housing (4), between the connections (7, 8, 9), to set at least one desired flow cross-section, and with a control shaft (23) which is non-rotatably connected to the valve element (22) and led out of the housing (4) with a coupling end (45) through an opening (36) in a housing wall of the housing (4), wherein the control shaft (23) has an annular projection (33) which has an axial stop for axial contact with an annular sealing projection (35) of the housing wall, and with at least one sealing element (40) acting between the control shaft (23) and the housing (4), wherein a chamber (39) is formed between the annular projection (33), the control shaft (23), the housing wall, and the sealing projection (35), in which the sealing element is located, and wherein the control shaft (23) protrudes into the sealing projection (35) with an axial projection (38) protruding axially from the annular projection (33) in order to limit the chamber (39), **characterized in that** an outer diameter of the axial projection (38) is slightly smaller than a diameter of the sealing projection (35) so that a narrow gap remains therebetween, and **in that** the annular projection (33) has at least one axial recess (41) on the end face (34) thereof facing the housing wall, which extends over a limited circumferential section of the end face (34) up to the radial outer edge of the annular projection (33) and which extends inward up to the axial projection (38) so that the medium can reach the chamber (39).

2. Rotary valve according to claim 1, **characterized in that** the annular projection (33) has several axial recesses (41) on the end face (34) thereof, which are in particular distributed evenly with respect to one another.

3. Rotary valve according to any of the preceding claims, **characterized in that** the annular projection (33) has at least three axial recesses (41).

4. Rotary valve according to any of the preceding claims, **characterized in that** the annular projection (33) has precisely four or more than four axial recesses (41).

5. Rotary valve according to any of the preceding claims, **characterized in that** the respective axial recess (41) has side edges (43) limiting the axial recess (41) in the circumferential direction, which are aligned radially or practically radially in relation to the control shaft (23).

6. Rotary valve according to any of claims 1 to 4, **characterized in that** the respective axial recess (41) has side edges (43) limiting the axial recess in the circumferential direction, which deviate from a radial alignment in relation to the control shaft (23) in such a way that they reduce the extension of the axial recess (41) in the circumferential direction, in the direction of the control shaft.

7. Rotary valve according to any of the preceding claims, **characterized in that** the side walls (43) extend in a straight line.

8. Rotary valve according to any of the preceding claims, **characterized in that** the side walls (43) have at least one curvature.

9. Rotary valve according to any of the preceding claims, **characterized in that** the annular projection (33) has at least one rotation stop (49), which is designed to interact with a housing-fixed stop (48) to limit a rotational range of the control shaft (23).

10. Rotary valve according to any of the preceding claims, **characterized in that** the rotation stop (49) is arranged between two of the axial recesses (21), as viewed in the circumferential direction.

11. Rotary valve according to any of the preceding claims, **characterized in that** the rotation stop (49) projects radially as a radial projection over the annular projection (33).

12. Rotary valve according to any of the preceding claims, **characterized in that** the housing-fixed stop (48) is arranged on the housing wall, in particular is formed therewith as a single piece.

13. Rotary valve according to any of the preceding claims, **characterized in that** it is designed as a disc valve with a valve disc (22) as a valve element or as a rotary piston valve with a rotary piston as a valve element.

## Revendications

1. Soupape rotative (2), en particulier soupape de régulation à plusieurs voies, avec un boîtier (4), lequel présente au moins un raccordement d'admission (7) et au moins un raccordement d'évacuation (8, 9) pour un milieu liquide et/ou gazeux, avec au moins un élément de soupape (22), lequel est monté pivotant dans le boîtier (4) pour l'ajustement d'au moins une section transversale d'écoulement souhaitée entre les raccordements (7, 8, 9), et avec un arbre de commande (23) relié solidaire en rotation à l'élément de soupape (22), lequel arbre de commande est sorti du boîtier (4) avec une extrémité d'accouplement (45) à travers une ouverture (36) dans une paroi de boîtier du boîtier (4), dans laquelle l'arbre de commande (23) présente une saillie annulaire (33), laquelle présente une butée axiale pour l'appui axial sur une saillie d'étanchéité annulaire (35) de la paroi de boîtier, et avec au moins un élément d'étanchéité (40) agissant entre l'arbre de commande (23) et le boîtier (4), dans laquelle entre la saillie annulaire (33), l'arbre de commande (23), la paroi de boîtier et la saillie d'étanchéité (35), est formée une chambre (39), dans laquelle se situe l'élément d'étanchéité, et l'arbre de commande (23), avec une saillie axiale (38) faisant saillie axialement de la saillie annulaire (33), dépasse dans la saillie d'étanchéité (35) pour la délimitation de la chambre (39), **caractérisée en ce qu'**un diamètre externe de la saillie axiale (38) est légèrement plus petit qu'un diamètre de la saillie d'étanchéité (35), de telle sorte qu'une fente plus étroite demeure entre celles-ci, et **en ce que** la saillie annulaire (33) présente sur sa face frontale (34) tournée vers la paroi de boîtier au moins un renfoncement axial (41), lequel s'étend sur une section circonférentielle délimitée de la face frontale (34) jusqu'au bord externe radial de la saillie annulaire (33) et vers l'intérieur jusqu'à la saillie axiale (38), de telle sorte que le milieu puisse pénétrer dans la chambre (39).

2. Soupape rotative selon la revendication 1, **caractérisée en ce que** la saillie annulaire (33) présente sur sa face frontale (34) plusieurs renfoncements axiaux (41), en particulier disposés les uns par rapport aux autres de manière uniformément répartie.

3. Soupape rotative selon l'une des revendications précédentes, **caractérisée en ce que** la saillie annulaire (33) présente au moins trois renfoncements axiaux (41).

4. Soupape rotative selon l'une des revendications précédentes, **caractérisée en ce que** la saillie annulaire (33) présente exactement quatre ou plus de quatre renfoncements axiaux (41).

5. Soupape rotative selon l'une des revendications précédentes, **caractérisée en ce que** le renfoncement axial (41) respectif présente dans la direction circonférentielle des bords latéraux (43) délimitant le renfoncement axial (41), lesquels sont orientés radialement ou presque radialement par rapport à l'arbre de commande (23).

6. Soupape rotative selon l'une des revendications 1 à 4, **caractérisée en ce que** le renfoncement axial (41) respectif présente dans la direction circonférentielle des bords latéraux (43) délimitant le renfoncement axial, lesquels divergent d'une orientation radiale par rapport à l'arbre de commande (23) de telle sorte que, dans la direction de l'arbre de commande, ils réduisent l'étendue du renfoncement axial (41) dans la direction circonférentielle.

7. Soupape rotative selon l'une des revendications précédentes, **caractérisée en ce que** les parois latérales (43) sont rectilignes.

8. Soupape rotative selon l'une des revendications précédentes, **caractérisée en ce que** les parois latérales (43) présentent au moins un coude.

9. Soupape rotative selon l'une des revendications précédentes, **caractérisée en ce que** la saillie annulaire (33) présente au moins une butée de rotation (49), laquelle est conçue pour coopérer avec une butée (48) solidaire du boîtier pour la délimitation d'une zone de rotation de l'arbre de commande (23).

10. Soupape rotative selon l'une des revendications précédentes, **caractérisée en ce que** la butée de rotation (49), vue dans la direction circonférentielle, est disposée entre deux des renfoncements axiaux (21).

11. Soupape rotative selon l'une des revendications précédentes, **caractérisée en ce que** la butée de rotation (49) fait saillie radialement par-dessus la saillie annulaire (33) en tant que saillie radiale.

12. Soupape rotative selon l'une des revendications précédentes, **caractérisée en ce que** la butée (48) solidaire du boîtier est disposée sur la paroi de boîtier, en particulier est conçue d'une seule pièce avec celle-ci.

13. Soupape rotative selon l'une des revendications précédentes, **caractérisée en ce qu'**elle est conçue en tant que soupape à disque avec un disque de soupape (22) en tant qu'élément de soupape, ou en tant que soupape à piston rotatif avec un piston rotatif en tant qu'élément de soupape.
